# EUROPEAN PATENT APPLICATION

(11) **EP 2 932 865 A1**
(43) Date of publication of application: **21.10.2015**
(21) Application number: 15163234.6
(22) Date of filing: 10.04.2015
(51) Int. Cl.: A43B 23/04, A43B 7/08, A43B 1/04

(54) **NON-SEWING MATERIAL FOR A FOOTWEAR UPPER, FOOTWEAR UPPER AND FOOTWEAR USING THE SAME**

(30) Priority: 15.04.2014 KR 20140045058
(71) Applicant: Song, Soo Bok, Busan 616-120 (KR)
(72) Inventor: Song, Soo Bok, Busan 616-120 (KR)
(74) Representative: Eder, Michael

(57) **Abstract**

A material for a footwear upper, includes a first side corresponding to an inner foot top and an inner side of a foot, a second side corresponding to an outer foot top and an outer side of the foot and extending outwards from an end of the first side to face the first side, a first wing portion extending outwards from the first side in a wing shape, and a second wing portion extending outwards from the second side in the wing shape. The first side and the second side, the first side and the first wing portion, and the second side and the second wing portion are integrated with each other, respectively so that a loss of the material may be reduced and manufacturing efficiency may be improved.

## Description

### CROSS-REFERENCE TO RELATED APPLICATIONS AND CLAIM OF PRIORITY

The present application claims the benefit of Korean Patent Application No. 10-2014-0045058, filed April 15, 2014 in the Korean Intellectual Property Office, the entire contents of which are incorporated herein by reference.

### BACKGROUND

### 1. Field of the Invention

The present invention relates, in general, to a non-sewing material for a footwear upper, a footwear upper and footwear using the material, and, more particularly, to a non-sewing material for a footwear upper, a footwear upper and footwear using the material, in which a wing is provided on each of an inner side and an outer side, thus reducing a loss of the material and improving manufacturing efficiency.

### 2. Description of the Related Art

Generally, footwear includes two main members, i.e., an upper and a sole structure. The upper is secured to the sole structure and defines an opening in the footwear to receive the foot comfortably and safely. The sole structure is secured to a lower region of the upper, and is thus positioned between the upper and the ground. For example, an athletic shoe may include a midsole and an outsole as the sole structure.

Korean Patent Laid-Open Publication No. 1999-0078893 discloses an upper manufacturing method, in which an artificial leather formed in various designs is attached to an upper not by a sewing method but by a fusing method through high-frequency compression of a mold in which various designs are formed. Korean Patent No. 10-1367445 discloses a footwear upper material having an integrated vertical separating structure.

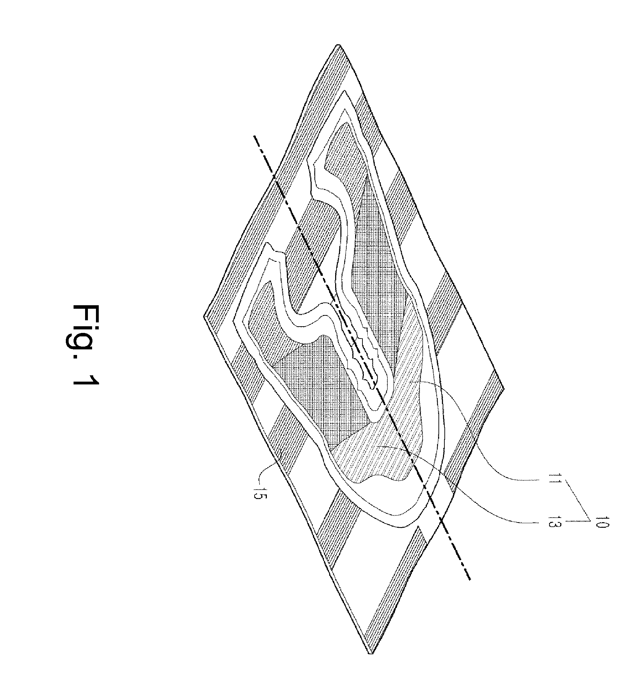

FIG. 1 is a perspective view showing fabric on which a footwear upper material is formed, according to Korean Patent No. 10-1367445.

Referring to FIG. 1, the conventional footwear upper material 10 includes an inner side 11 and an outer side 13. The inner side 11 is a portion that is in close contact with an inner foot top and an inner foot side when the upper material is divided into two portions in a longitudinal direction, whereas the outer side 13 is a portion that is in close contact with an outer foot top and an outer foot side. The upper material 10 is formed by weaving weft and warp using a loom, and is composed of an inner side 11 and an outer side 13.

Generally, only four to five upper materials may be transversely formed on a breadth of jacquard fabric, and these upper materials 10 are formed at regular intervals. In order to prevent a base portion of the fabric on which no upper material 10 is formed from being bent or twisted, an additional support portion 15 should be formed on the base portion by the weft and the warp.

However, the support portion occupies a large area of the fabric, thus causing a waste of the fabric, and besides, the formation of the support portion leads to an inefficient process. Particularly, portions of the fabric other than a portion on which the upper is formed are disposed of, thus resulting in the loss of the fabric and consequently the waste of the material.

Further, the conventional woven upper is manufactured as follows: after only both sides which are to be placed on the top of the foot are formed and are coupled with each other to define the appearance of the upper, a bottom portion which is to be coupled with the sole is coupled to the lower portions of the coupled sides by sewing or by using an adhesive. Such an operation requires highly skilled workers and increases a defective rate.

Therefore, there is an urgent need for developing a footwear upper, which is capable of minimizing the loss of the fabric, improving the efficiency of a process, and reducing the defective rate of a product.

### SUMMARY

Accordingly, the present invention has been made keeping in mind the above problems occurring in the related art, and an object of the present invention is to provide a non-sewing material for a footwear upper, a footwear upper and footwear using the material, in which a base portion of fabric that has hitherto been disposed of is incorporated into portion of an upper material, thus maximally preventing the loss of the material.

Another object of the present invention is to provide a non-sewing material for a footwear upper, a footwear upper and footwear using the material, in which a wing portion is provided on an outer portion of the upper in such a way as to extend therefrom, so that the upper itself can serve as a support portion, thus minimizing the formation of the support portion, and preventing the waste of material for forming the support portion, therefore maximizing economic efficiency.

A further object of the present invention is to provide a non-sewing material for a footwear upper, a footwear upper and footwear using the material, in which a bottom portion of the upper is formed on an extending wing portion, thus allowing the bottom portion of the upper to be easily formed, therefore enhancing the process efficiency and minimizing the defective rate of a product.

In order to accomplish the above objects, an aspect of the present invention provides a non-sewing material for a footwear upper, including a first side corresponding to an inner foot top and an inner side of a foot; a second side corresponding to an outer foot top and an outer side of the foot, and extending outwards from an end of the first side to face the first side; a first wing portion extending outwards from the first side in a wing shape; and a second wing portion extending outwards from the second side in the wing shape. The first side and the second side, the first side and the first wing portion, and the second side and the second wing portion may be integrated with each other, respectively.

Another aspect of the present invention provides a footwear upper, which is manufactured using the material for the footwear upper.

A further aspect of the present invention provides a footwear comprising the footwear upper which is manufactured using the material, and a sole structure which is secured to the footwear upper.

As is apparent from the above description, the present invention is advantageous in that the base portion of fabric that has hitherto been disposed of is incorporated into the upper material, thus maximally preventing the loss of material when the footwear is made, and in that the wing portion is provided on the outer portion of the upper in such a way as to extend therefrom, so that the upper itself can serve as the support portion, thus minimizing the formation of the support portion, and in that the bottom portion of the upper is formed on the extending wing portion, thus allowing the bottom portion of the upper to be easily formed, therefore enhancing the process efficiency and minimizing the defective rate of a product.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view showing fabric on which a conventional material for a footwear upper is formed;
FIG. 2 is a left-handed side view showing footwear;
FIG. 3 is a right-handed side view showing the footwear;
FIG. 4 is a plan view showing a non-sewing material for a footwear upper according to an embodiment of the present invention;
FIG. 5 is a plan view showing fabric on which a non-sewing material for a footwear upper according to the embodiment of the present invention is formed;
FIG. 6 is a bottom view showing a footwear upper according to an embodiment of the present invention; and
FIG. 7 is a perspective view showing a non-sewing material for a footwear upper according to an embodiment of the present invention, in which an air ventilating portion is formed in the material.

### DETAILED DESCRIPTION

Hereinafter, preferred embodiments of the present invention will be described in detail with reference to the accompanying drawings.

Like reference numerals are used to identify like elements throughout different drawings Further, in the following description, if it is decided that the detailed description of known function or configuration related to the invention makes the subject matter of the invention unclear, the detailed description is omitted.

Further, when describing the components of the present invention, terms indicating a direction such as a left side or a right side may be changed depending on a reference, and terms such as an inner portion or an outer portion may also be changed depending on a reference. Furthermore, when describing the components of the present invention, terms such as first, second, A, B, (a) or (b) may be used. Since these terms are provided merely for the purpose of distinguishing the components from each other, they do not limit the nature, sequence or order of the components. When a component is referred to as being "connected to", "coupled to", or "joined to" another component, it may be directly connected to the another component or be indirectly connected to the another component with one or more intervening components interposed therebetween.

Herein, assuming that the footwear is longitudinally divided into two portions in the state where a wearer puts on the footwear, an 'inner side' designates a left region in right footwear or an upper for the right footwear and designates a right region in left footwear or an upper for the left footwear and is also referred to as a first side', whereas an 'outer side' designates the right region in the right footwear or the upper for the right footwear and designates the left region in the left footwear or the upper for the left footwear and is also referred to as a 'second side'. Further, a 'front portion' and a 'rear portion' are relative concepts that are determined based on the direction of the footwear. Here, the 'front portion' may be designated as an 'upper portion', while the 'rear portion' may be designated as a lower portion'.

Herein, the material for the footwear upper is a material that is required to make the footwear upper, and corresponds to an open footwear upper. The footwear upper is made by sewing the footwear upper material into a desired shape.

The footwear upper of the present invention may be applied to various types of athletic shoes, for example, running shoes, training shoes, hiking shoes, basketball shoes, volleyball shoes, cross training shoes, cycling shoes, football shoes, tennis shoes, and soccer shoes. Furthermore, the upper of this invention may also be applied to non-athletic shoes, for example, dress shoes, casual shoes, sandals, and work boots. Thus, the footwear upper of this invention may be applied to a variety of types of shoes.

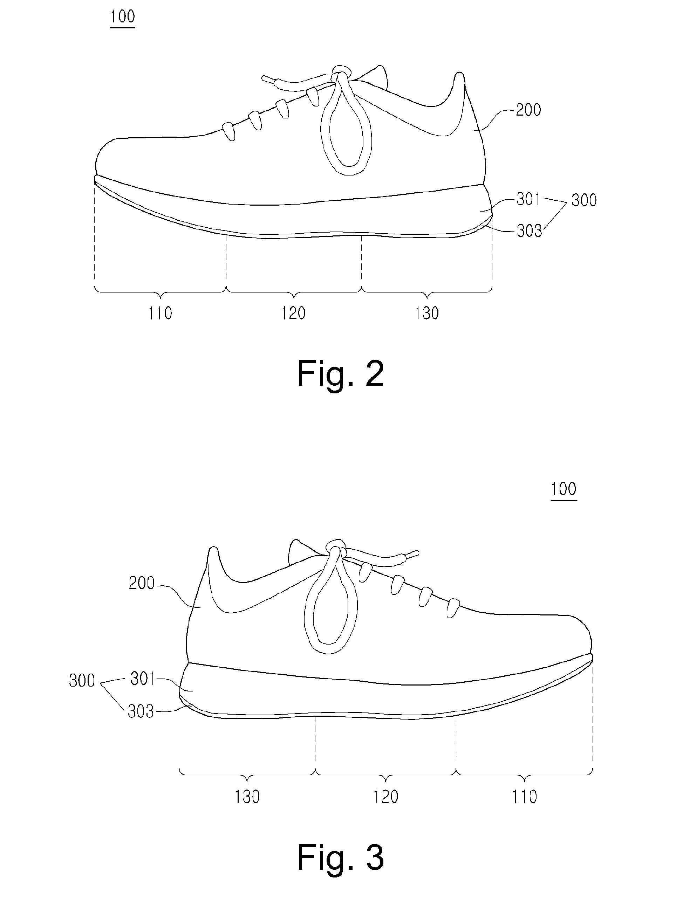

Hereinbelow, the footwear will be described with reference to FIGS. 2 and 3. FIG. 2 is a side view showing an outer side of left footwear, and FIG. 3 is a side view showing an inner side of the left footwear.

Referring to FIGS. 2 and 3, the footwear 100 generally includes an upper 200 and a sole structure 300.

The upper 200 may be formed from various members that are combined with each other to provide a structure for accommodating the foot firmly and comfortably. The upper 200 may be configured variously, but various members generally define an opening in the footwear 100 to accommodate and support the foot in cooperation with the sole structure. A surface of the opening in the upper 200 is shaped to accommodate the foot, and extends from the top of the foot and a tiptoe region, through the inner and outer sides of the foot, to the lower region of the foot and the heel region of the foot.

The sole structure 300 is secured to the upper 200 and positioned between the foot and the ground when a wearer puts on the footwear 100. The main members of the sole structure 300 include a midsole 301, an outsole 303 and an inner sole (not shown). The midsole 301 is secured to a lower region of the upper 200, and may be formed a polymer foamed member (e.g., a foamed material of polyurethane or ethyl vinyl acetate) to attenuate the reaction (i.e., cushioning operation) to the ground when the midsole 301 is compressed between the foot and the ground during walking, running or other activities. Further, the midsole 301 may incorporate a fluid filled chamber, a plate, a moderator and other members, which attenuate force, increase stability, or affect the movement of the foot. Alternatively, the midsole 301 may be mainly formed of the fluid filled chamber. The outsole 303 is secured to the lower surface of the midsole 301 and may be made of a wear-resistant rubber material to provide traction. The inner sole is positioned inside the upper 200 in such a way as to extend to the lower surface of the foot. Although such a configuration for a sole assembly 300 provides an example of the sole structure that may be used together with the upper 200, it is possible to use various usual or unusual configurations for the sole assembly 300. Thus, the configuration and characteristics of the sole assembly 300 used along with the upper 200 or any sole assembly may be considerably changed.

The footwear 100 may be divided into an anterior region 110, a middle region 120 and a heel region 130, in order from a front (toe region).

The anterior region 110 generally includes a portion of the footwear 100 that corresponds to a joint connecting the metatarsal with the phalange and the tiptoe. The middle region 120 generally includes a portion of the footwear 100 corresponding to the arch region of the foot, and the heel region 130 corresponds to the heel region including the calcaneus.

The anterior region 110, the middle region 120 and the heel region 130 are integrated with each other. The anterior region 110 intersects with the middle region 120 on a first extrapolated line, and the middle region 120 intersects with the heel region 130 on a second extrapolated line. That is, the middle region 120 extends integrally with the anterior region 110, and the heel region 130 extends integrally with the middle region 120. For example, in the case of a usual athletic shoe, the first extrapolated line may be determined based on the lowermost eyelet, and the second extrapolated line may be determined at a point where the arch region of the foot ends. However, the respective regions are not intended to precisely distinguish the regions of the footwear 100 from each other, but are merely intended to aid in understanding the present invention. They may be applied to a finished product, namely, the footwear as well as the sole structure 300, the upper 200 and individual members thereof.

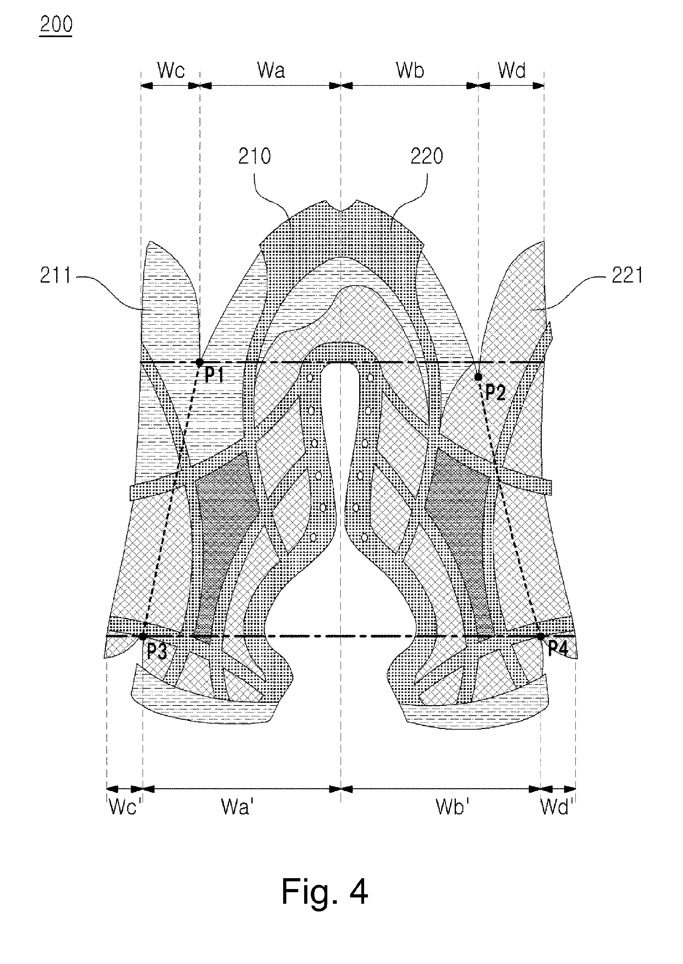

Next, the upper according to an embodiment of the present invention will be described with reference to FIGS. 4 to 7.

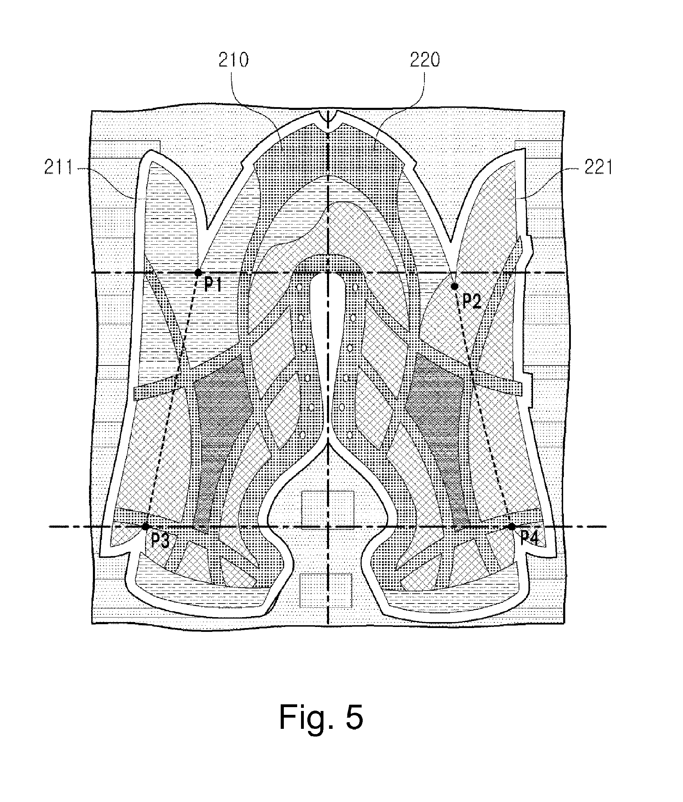

FIG. 4 is a plan view showing a material for a footwear upper according to an embodiment of the present invention, and FIG. 5 is a plan view showing fabric on which the material for the footwear upper according to the embodiment of the present invention is formed. Both the drawings are plan views showing the upper for the right foot.

Referring to FIG. 4, the upper material 200 according to the present invention includes a first side 210, a second side 220, a first wing portion 211 and a second wing portion 221.

The first side 210 is a portion corresponding to the inner foot top and the inner side of the foot, and is referred to as the inner side.

The second side 220 corresponds to the outer foot top and the outer side of the foot, and extends outwards from an end of the first side 210 to form the opening in the footwear along with the first side 210.

Each of the first and second sides 210 and 220 may include an anterior region, a middle region and a heel region which are integrated with each other. Preferably, the first side 210 and the second side 220 are formed to face each other. The second side 220 may extend from a front end or a rear end of the first side 210.

The first wing portion 211 extends outwards from the first side 210 to form a portion of the bottom surface of the upper 200, and the second wing portion 221 extends outwards from the second side 220 to form the bottom surface of the upper 200 along with the first wing portion 211. Although each of the first and second wing portions 211 and 221 may have various shapes, it basically has the shape of a wing. The width and shape of the first and second wing portions 211 and 221 are set to form the bottom surface of the upper when the first and second wing portions 211 and 221 are coupled with each other.

Preferably, the first side and the second side, the first side and the first wing portion, and the second side and the second wing portion may be integrated with each other, respectively.

The upper portions of the first side 210 and the first wing portion 211 are branched from each other in an approximately ∨ shape, while the lower portions thereof are branched from each other in an approximately ∧ shape. By connecting both end points to each other, the shape of the first wing portion 211 is obtained. The upper portion of the first wing portion 211 may be branched from the first side 210 in an approximately ∨ shape at one end of the first extrapolated line at which the anterior region intersects with the middle region, and the lower end of the first wing portion 211 may be branched in an approximately ∧ shape at one end of the second extrapolated line at which the middle region intersects with the heel region.

Likewise, the upper portions of the second side 220 and the second wing portion 221 are also branched from each other in the approximately ∨ shape, while the lower portions thereof are branched from each other in the approximately ∧ shape. By connecting both end points to each other, the shape of the second wing portion 221 is obtained. Further, the upper end of the second wing portion 221 may be branched at the other end of the first extrapolated line, and the lower end thereof may be branched at the other end of the second extrapolated line.

Preferably, in order to provide a good wearing sensation, a height difference may be set between each side and each wing portion. To be more specific, it is preferable that the leading end of the first wing portion be located behind the leading end of the first side, and the leading end of the second wing portion be located behind the leading end of the second side. In this context, the 'leading end' denotes an uppermost (foremost) point of an associated component.

Preferably, the sum of both sides of the first side and the first wing portion which are branched from each other in the ∨ shape is equal to the sum of both sides of the second side and the second wing portion which are branched from each other in the ∨ shape. Further, the sum of both sides of the first side and the first wing portion which are branched from each other in the ∧ shape is equal to the sum of both sides of the second side and the second wing portion which are branched from each other in the ∧ shape.

Preferably, both lines of the ∨ shape and the ∧ shape do not take the shape of a perfect straight line but take the curved shape corresponding to portion of an ellipse as shown in FIGS. 4 and 5.

Meanwhile, the first side 210 and the second side 220 are similar in shape to each other but are not perfectly symmetrical with respect to each other. Likewise, the firstwing portion 211 and the second wing portion 221 are similar in shape to each other but are not perfectly symmetrical with respect to each other. According to the present invention, by changing their widths or shapes, it is possible to maximize a wearing sensation.

To be more specific, when seen at a position around the first extrapolated line, the width Wa of the first side is larger than the width Wb of the second side, and the width Wc of the first wing portion is smaller than the width Wd of the second wing portion. For example, as shown in FIGS. 4 and 5, in the case of the upper 200 for the right foot, when seen at a position around the first extrapolated line, the width Wa of the left side (i.e. first side) 210 is larger than the width Wb of the right side (i.e. second side) 220, and the width Wc of the first wing portion 211 is smaller than the width Wd of the second wing portion 221, and the sum Wa+Wc of the width Wa of the left side and the width Wc of the first wing portion is equal to the sum Wb+Wd of the width Wb of the right side and the width Wd of the second wing portion. On the other hand, when seen at a position around the second extrapolated line, the width Wa' of the left side (i.e. first side) 210 is equal to the width Wb' of the right side (i.e. second side) 220, and the width Wc' of the first wing portion is equal to the width Wd' of the second wing portion.

Likewise, in the case of the upper for the left foot, when seen at a position around the first extrapolated line, the width of the right side (i.e. first side) is larger than the width of the left side (i.e. second side), and the width of the first wing portion is smaller than the width of the second wing portion, and the sum of the width of the right side and the width of the first wing portion is equal to the sum of the width of the left side and the width of the second wing portion. On the other hand, when seen at a position around the second extrapolated line, the width of the right side (i.e. first side) is equal to the width of the left side (i.e. second side), and the width of the first wing portion is equal to the width of the second wing portion.

Further, a branch point P1 at which the first side 210 and the first wing portion 211 are branched from each other in the ∨ shape and a branch point P2 (a lowermost point of the ∨ shape) at which the second side 220 and the second wing portion 221 are branched from each other are not on the same horizontal line. The branch points are determined in view of the shape of the foot, but the first branch point P1 is positioned above the second branch point P2. For example, the first branch point P1 may be placed on or above the first extrapolated line, while the second branch point may be placed under the first extrapolated line. In contrast, a third branch point P3 at which the first side 210 and the first wing portion 211 are branched from each other in the ∧ shape and a fourth branch point P4 at which the second side 220 and the second wing portion 221 are branched from each other are preferably on the same horizontal line.

According to the embodiment of the present invention, when seen at a position around the first extrapolated line, the first side 210 is different in width from the second side 220 and the first wing portion 211 is different in width from the second wing portion 221, the first branch point P1 is different in height from the second branch point P2 and a height difference between the leading end of each side and the leading end of each wing portion is changed, thus maximizing the wearing sensation.

FIG. 4 shows an example wherein the leading end of the first side 210 and the leading end of the second side 220 are integrally formed. However, a rear end of the first side and a rear end of the second side may be integrally formed.

As shown in FIG. 5, in the case of forming the upper material according to the embodiment of the present invention, it can be seen that some of the base portion which has been hitherto disposed of is used as the first wing portion 211 and the second wing portion 221.

Textile is referred to as cloth that is made by interweaving weft with one or several strands of warp arranged to be parallel to the longitudinal direction thereof in such a way that the weft perpendicularly intersects with the warp. This is manufactured using a loom. Meanwhile, knit is divided into two kinds, namely, weft knit and warp knit according to the structure and the direction in which yarn is fed to form the loop of the knit, and is basically different from woven textile or nonwoven textile. That is, a product made by linking loops formed by one type of yarn, namely, weft or warp is referred to as the knit. Preferably, the footwear upper 200 of the present invention may be formed on the textile.

Only four to five uppers may be formed at regular intervals in a horizontal direction on a breadth of the textile that is woven by the weft and the warp. Here, the base portion having no upper requires the support portion to hold the textile so as to prevent it from being bent or twisted. Since the conventional footwear upper has only the first side and the second side, an area occupied by the support portion is large, thus causing the waste of the weft and the warp due to the formation of the support portion and causing a large area of base portion to be disposed of, therefore leading to the loss of a material. However, according to the present invention, the first wing portion 211 and the second wing portion 221 serve as the support portion, thus significantly reducing an area for the support portion as well as a portion that is to be disposed of, and thereby considerably reducing manufacturing cost.

Further, the conventional upper is composed of only the first side and the second side, so that a process of forming the bottom surface is required after the first and second sides are coupled to form an appearance. The process of forming the bottom surface needs precise and skilled work, thus increasing a defective rate, requiring skilled workers, and requiring an additional material for the bottom surface. In contrast, according to the present invention, the bottom surface of the upper can be very easily formed using the first wing portion 211 and the second wing portion 221 during the lasting work, and the defective rate can be minimized, and no material for forming the bottom surface is required.

An aspect of the present invention provides the footwear upper using the above-described material for the footwear upper.

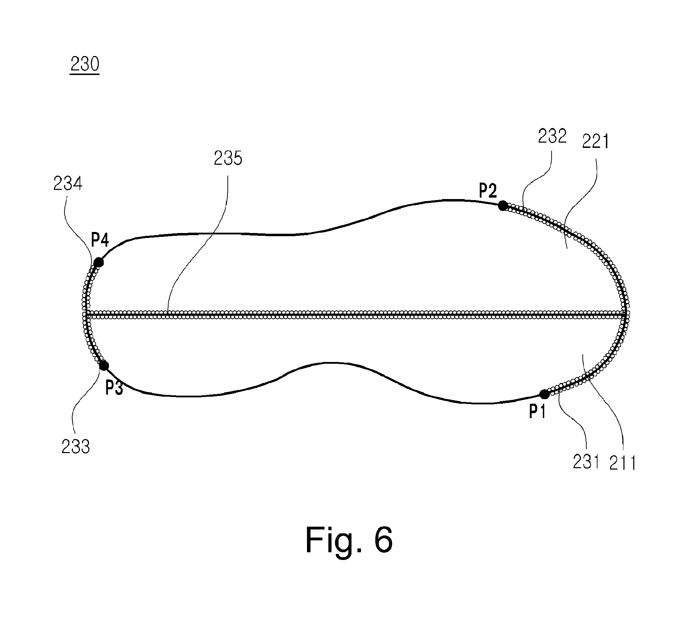

FIG. 6 is a bottom view showing a footwear upper according to an embodiment of the present invention.

Referring to FIG. 6, the footwear upper according to the embodiment of the present invention includes a first side, a second side and a bottom surface 230.

The first side corresponds to the inner foot top and the inner side of the foot, and the second side corresponds to the outer foot top and the outer side of the foot and extends outwards from an end of the first side to form the opening in the footwear along with the first side.

The bottom surface extends from the first side and the second side, and includes a first wing portion that extends outwards from the first side in a wing shape and a second wing portion that extends outwards from the second side in the wing shape.

Preferably, the first side and the first wing portion are branched from each other in an approximately ∨ shape at a front position, and are branched from each other in an approximately ∧ shape at a rear position. Likewise, the second side and the second wing portion are branched from each other in an approximately ∨ shape at a front position, and are branched from each other in an approximately ∧ shape at a rear position.

Preferably, branched lines of the first side and the first wing portion are coupled to each other, branched lines of the second side and the second wing portion are coupled to each other, and the outer line of the first wing portion and the outer line of the second wing portion are coupled to each other, thus forming the bottom surface 230.

Preferably, at the front portion of the bottom surface 230, namely, the anterior region, an end of a coupled portion of the first side and the first wing portion may be positioned in front of an end of a coupled portion of the second side and the second wing portion. On the other hand, at the rear portion of the bottom surface 230, namely, the posterior region, an end of a coupled portion of the first side and the first wing portion and an end of a coupled portion of the second side and the second wing portion may be on the same line. However, this may be determined according to the branch point of the wing portion.

As shown in FIG. 6, in order to manufacture the footwear upper according to an aspect of the present invention, the first side 210 and the first wing portion 211, the second side 220 and the second wing portion 221, and the first side 210 and the second side 220 are coupled to each other, respectively.

For example, in order to manufacture the footwear upper, the v-shaped branched portions of the first side 210 and the first wing portion 211 are coupled to each other, thus forming a first coupled region 231, and the v-shaped branched portions of the second side and the second wing portion 221 are coupled to each other, thus forming a second coupled region 232. Here, the first branch point P1 and the second branch point P2 may be on the same line or on different lines. A length difference between the first coupled region 231 and the second coupled region 232 may be determined according to the heights at which the first coupled region 231 and the second coupled region 232 are located. Preferably, since the second branch point P2 is located below the first branch point P1, the length of the first coupled region 231 may be shorter than that of the second coupled region 232.

Meanwhile, by sewing the front portions (leading ends) of the first and second sides that are placed to be in contact with each other, a step of forming a toe cap of thefootwear upper may be further performed. This step may be performed before the branched portions are coupled to each other to form the respective coupled regions, or may be performed after at least one of the first coupled region 231 and the second coupled region 232 has been formed. As such, the order of the step may be properly determined in consideration of the characteristics of thefootwear.

Further, the ∧-shaped branched portions of the first side and the first wing portion 211 are coupled to each other to form a third coupled region 233, and the ∧-shaped branched portions of the second side and the second wing portion 221 are coupled to each other to form a fourth coupled region 234. Here, the third branch point P3 and the fourth branch point P4 may be located at the same height or different heights. Preferably, both the branch points may be on the same line. Thus, it is preferable that the third coupled region 233 and the fourth coupled region 234 have the same length.

Next, the outer line of the first wing portion 211 and the outer line of the second wing portion 221 are coupled to each other, so that the fifth coupled region 235 is formed on a central portion of the bottom surface 230 as shown in FIG. 6.

The respective branched lines may be coupled to each other by sewing or through needlework. Each coupled region is formed as such, so that the bottom surface 230 of the upper is finally formed. According to the present invention, the bottom surface can be very easily formed, thus enhancing the process efficiency and minimizing the defective rate.

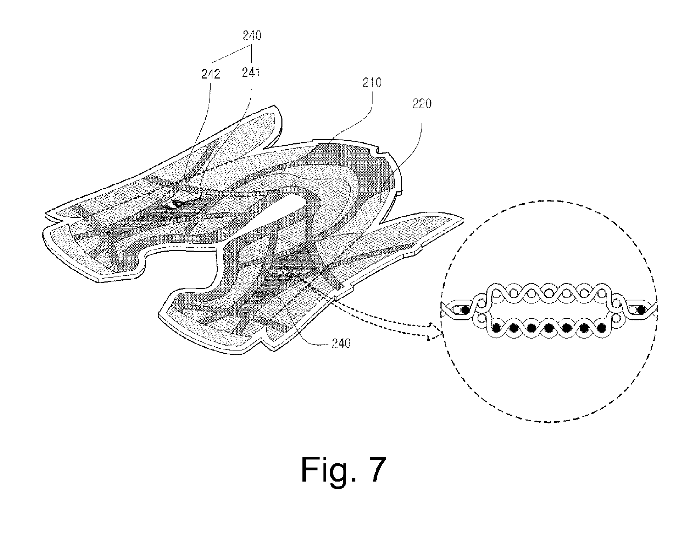

An upper material according to another embodiment of the present invention will be described with reference to FIG. 7. FIG. 7 is a perspective view showing the material for the footwear upper having an air ventilating portion according to the embodiment of the present invention. In FIG. 7, an edge formed along an outer border of the upper is only a portion that is added in consideration of needlework or sewing.

Referring to FIG. 7, the air ventilating portion 240 may be formed on a portion of at least one of the first and second sides 210 and 220. Such an air ventilating portion 240 may be formed on the first side 210 in various shapes or forms, and may be formed on the second side 220 in various shapes or forms. Footwear has an offensive odor and is unsanitary when it is wet with sweat and in a wet state the footwear can even impair the health of the foot. Hence, it is important to secure a ventilation effect.

In the case of knit footwear, it is easy to form an air ventilating hole. Meanwhile, in the case of the footwear made of a textile made by interweaving warp with weft, it is difficult to form an air ventilating hole, so it is important to provide an air ventilating means.

Thus, according to the present invention, the textile is made to have a portion looser than a remaining portion, so that the air ventilating portion 240 is formed using the looser portion. That is, at a point where the air ventilating portion 240 is formed, upper and lower plates 241 and 242 made by weft and warp are separated from each other in a vertical direction. Thus, when the upper and lower plates 241 and 242 are simultaneously woven, the portion becomes looser than the remaining portion. Preferably, the upper of the present invention may form the inner and outer sides of the upper and the air ventilating portion merely by a single weaving operation.

The warp and the weft weaving the upper may have the combination of many strands of transparent or translucent fiber and many strands of colored fiber having various colors, or have only the colored fiber. By appropriately combining the transparent fiber and the colored fiber according to the design of the upper, it is possible to form the air ventilating portion.

As shown in a partial sectional enlarged view of FIG. 7, the base portion of the inner and outer sides corresponding to the peripheral portion of the air ventilating portion is the most compact and densest in the upper. This portion is formed by weaving all the transparent fiber and/or the colored fiber constituting the weft and the warp together, and the air ventilating portion is woven in the state where it is divided into the upper and lower plates 241 and 242. The upper plate 241 and the lower plate 242 are simultaneously woven. They may have independent structures which are separated in two layers through jacquard weaving or the like.

Since the air ventilating portion 240 and the base portion (the peripheral portion of the air ventilating portion) are equal to each other in a total number of strands of weft and warp, the total number of strands of the weft and warp of the base portion are equal to the total number of strands of the weft and warp of the upper and lower plates 241 and 242. Thus, each of the upper and lower plates of the air ventilating portion 240 is looser than the peripheral portion of the air ventilating portion. In order to visually enhance the ventilation effect and achieve aesthetically pleasing effect, the upper plate 241 of the air ventilating portion may be preferably formed of the transparent fiber.

If the upper plate 241 is formed of the transparent fiber, it does not only provide ventilation effect but also renders the lower plate 242 to be exposed to some extent. Thus, if a logo or the like is formed on the lower plate 242, it can achieve good effect.

That is, when the upper plate 241 is transparent or translucent and the logo is formed on the lower plate 242, the air ventilating portion 240 may serve as a logo portion. The upper plate 241 is preferably made of transparent or translucent fiber to make the logo of the lower plate 242 be exposed to the outside, and the logo formed on the lower plate 242 preferably includes colored fiber.

The lower plate 242 of the air ventilating portion or the logo portion may be woven in various ways. That is, it may be woven by mixing the colored fiber with the transparent fiber, by using only the colored fiber or by using only the transparent fiber. As such, the lower plate 242 may have any color, which is selected in view of a design.

As such, a logo is formed with colored fiber on the lower plate 242 of the logo portion, while the upper plate 241 is woven by transparent fiber, so that the logo is delicately and elegantly exposed to the outside, thus achieving very aesthetically pleasing effect in terms of design.

Further, the present invention provides footwear including the footwear upper and the sole structure secured to the footwear upper.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A material for a footwear upper, comprising:
a first side corresponding to an inner foot top and an inner side of a foot;
a second side corresponding to an outer foot top and an outer side of the foot, and extending outwards from an end of the first side to face the first side;
a first wing portion extending outwards from the first side in a wing shape; and
a second wing portion extending outwards from the second side in the wing shape;
wherein the first side and the second side, the first side and the first wing portion, and the second side and the second wing portion are integrated with each other, respectively.

2. The material as set forth in claim 1, wherein the first side and the second side are symmetrically formed; and
the first wing portion and the second wing portion are symmetrical formed.

3. The material as set forth in claim 1 or claim 2, wherein each of the first and second sides comprises an anterior region, a middle region and a heel region which are integrated with each other,
at a position around a first extrapolated line where the anterior region meets the middle region, a sum of a width of the first side and a width of the first wing portion is equal to a sum of a width of the second side and a width of the second wing portion.

4. The material as set forth in claim 3, wherein, at a position around a second extrapolated line where the middle region meets the heel region, the sum of the width of the first side and the width of the first wing portion is equal to the sum of the width of the second side and the width of the second wing portion.

5. The material as set forth in claim 3 or claim 4, wherein, at the position around the first extrapolated line, the first side is larger in width than the second side, and the first wing portion is smaller in width than the second wing portion.

6. The material as set forth in claim 4, wherein, at the position around the second extrapolated line, the first side is equal in width to the second side, and the first wing portion is equal in width to the second wing portion.

7. The material as set forth in any one of claims 1 to 6, wherein the second side extends from a front end or a rear end of the first side.

8. The material as set forth in any one of claims 1 to 7, wherein a leading end of the first wing portion is located behind a leading end of the first side, and a leading end of the second wing portion is located behind a leading end of the second side.

9. The material as set forth in any one of claims 1 to 8, wherein at a front portion, the first side and the first wing portion, and the second side and the second wing portion are branched, respectively, from each other in an approximately ∨ shape;
at a rear portion, the first side and the first wing portion, and the second side and the second wing portion are branched, respectively, from each other in an approximately ∧ shape; and
at the front portion, a point where the first side and the first wing portion are branched from each other is located in front of a point where the second side and the second wing portion are branched from each other.

10. The material as set forth in any one of claims 1 to 9, wherein the material for the footwear upper is non-sewing material.

11. The material as set forth in any one of claims 1 to 10, wherein the material is made of textile woven by weft and warp.

12. The material as set forth in claim 11, further comprising:
an air ventilating portion formed on a predetermined portion of at least one of the first side and the second side;
wherein the air ventilating portion is made by simultaneously weaving upper and lower plates that are looser than a peripheral portion and are vertically separated from each other, and a total number of strands of the weft and warp forming the upper and lower plates is equal to a total number of strands of weft and warp forming the peripheral portion of the air ventilating portion.

13. The material as set forth in claim 12, wherein the upper plate is formed of transparent warp and weft, a colored logo portion is formed on at least portion of the lower plate, and at least one of weft and warp forming the logo portion comprises colored fiber.

14. A footwear upper manufactured using a material for the footwear upper described in any one of claims 1 to 13.

15. Footwear, comprising:
a footwear upper of claim 14; and
a sole structure secured to the footwear upper.
